# EUROPÄISCHE PATENTANMELDUNG

(11) **EP 0 970 849 A2**
(43) Veröffentlichungstag der Anmeldung: **12.01.2000**
(21) Anmeldenummer: 99112828.1
(22) Anmeldetag: 02.07.1999
(51) Int. Cl.: B60Q 3/02

(54) **Verfahren zur Ansteuerung der Innenraumbeleuchtung von Fahrzeugen**

(30) Priorität: 10.07.1998 DE 19830873
(71) Anmelder: Mannesmann VDO Aktiengesellschaft, 60388 Frankfurt am Main (DE)
(72) Erfinder: Meyer, Martin, 65936 Frankfurt (DE); Schäfer, Axel, 65830 Kriftel (DE)
(74) Vertreter: Klein, Thomas, Dipl.-Ing.

(57) **Zusammenfassung**

Die Erfindung betrifft ein Fahrzeug mit einer Zentralverriegelung für Türen, Heckklappen oder dergleichen, sowie mit Mitteln für die Beleuchtung eines Innenraumes des Fahrzeuges, wobei erfindungsgemäß vorgesehen ist, daß die Zentralverriegelung eine zentrale Steuereinheit (1) aufweist, wobei die zentrale Steuereinheit (1) einen Ausgang (7) sowohl für zumindest einen Stellantrieb (2) als auch für die Mittel für die Beleuchtung des Innenraumes aufweist.

## Beschreibung

Die Erfindung betrifft ein Fahrzeug mit einer Zentralverriegelung sowie einer Innenraumbeleuchtung gemäß den Merkmalen des Oberbegriffes des Patentanspruches 1.

Solche Fahrzeuge mit einer eingangs genannten Einrichtung sind bekannt. Die Zentralverriegelung bewirkt nach einem Eingabebefehl, beispielsweise mittels einer Schlüsselbetätigung oder der Betätigung einer Fernbedienung, daß die Türen, Heckklappen oder dergleichen des Fahrzeuges beziehungsweise deren Schließeinrichtung zentral verriegelt werden, so daß ein Zugang zum Fahrzeug nicht mehr möglich ist, oder zentral entriegelt werden, so daß dadurch der Zugang zum Fahrzeug ermöglicht wird.

Daneben ist es bei solchen Fahrzeugen bekannt, daß mit Öffnen der Tür, der Heckklappe oder dergleichen die Mittel für die Beleuchtung des Innenraumes eingeschaltet und nach Schließen der Tür, der Heckklappe oder dergleichen wieder ausgeschaltet werden.

Sowohl für die Verkabelung der Zentralverriegelung zu den einzelnen Stellantrieben in den Türen und der Heckklappe sowie für die Mittel für die Beleuchtung der Innenräume ist eine Vielzahl von Kabeln erforderlich, die das Gewicht des Fahrzeuges erhöhen und einen hohen Montageaufwand bedingen.

Der Erfindung liegt daher die Aufgabe zugrunde, ein derart bekanntes Fahrzeug mit der Forderung nach einer Reduzierung von Material- und Montageaufwand bereitzustellen.

Diese Aufgabe ist durch die Merkmale des Patentanspruches 1 gelöst.

Erfindungsgemäß ist vorgesehen, daß die Zentralverriegelung eine zentrale Steuereinheit aufweist, wobei die zentrale Steuereinheit einen gemeinsamen Ausgang sowohl für zumindest einen Stellantrieb als auch für die Mittel für die Beleuchtung des Innenraumes aufweist. Von dem Ausgang der zentralen Steuereinheit führt eine Zuleitung sowohl zu dem Stellantrieb als auch zu den Mitteln für die Beleuchtung, so daß voneinander getrennte Endstufen und Ausgänge und Zuleitungen zu den genannten Elementen entfallen können. Der Stellantrieb ist über eine weitere Leitung mit der zentralen Steuereinheit verbunden, während die Mittel für die Beleuchtung des Innenraumes beispielsweise gegen Masse verschaltet sind. Die Verwendung eines gemeinsamen Ausganges sowohl für den Stellantrieb als auch für die Mittel für die Beleuchtung des Innenraumes hat auch noch den Vorteil, daß sich der schaltungstechnische Aufbau der zentralen Steuereinheit vermindert, da auf eine weitere Endstufe sowie einen zusätzlichen Steckerplatz (Anschlµß) verzichtet werden kann.

Unter Innenraumbeleuchtung ist die Fahrgastraumbeleuchtung, die Beleuchtung im Kofferraum, im Handschuhfach oder dergleichen zu verstehen, wobei auch weitere Leuchten wie zum Beispiel Einstiegsleuchten in den Türen von Personen- oder Lastkraftwagen darunter zu verstehen sind.

In Weiterbildung der Erfindung sind die Mittel für die Beleuchtung des Innenraumes unabhängig oder ahängig von der Ansteuerung des Stellantriebes ansteuerbar. Sollen zum Beispiel die Mittel für die Beleuchtung des Innenraumes gleichzeitig mit der Ansteuerung des Stellantriebes eingeschaltet beziehungsweise ausgeschaltet werden, ist die Zuleitung für den Stellantrieb und die Innenraumbeleuchtung an dem gemeinsamen Ausgang angeschlossen, wobei die zweite Zuleitung zu dem Stellantrieb und die zweite Zuleitung zu der Innenraumbeleuchtung auf dem gleichen Potential (entweder an der zentralen Steuereinheit oder auf Masse) liegen. Soll die Ansteuerung der Innenraumbeleuchtung unabhängig von der Ansteuerung des Stellantriebes erfolgen, liegen die beiden Rückleitungen des Stellantriebes und der Innenraumbeleuchtung auf unterschiedlichem Potential.

In Weiterbildung der Erfindung ist den Mitteln für die Beleuchtung des Innenraumes eine von der zentralen Steuereinheit ansteuerbare Einrichtung zur Leuchtstärkeregelung zugeordnet. Damit kann zum Beispiel bei Ansteuerung des Stellantriebes und gleichzeitiger Ansteuerung der Innenraumbeleuchtung diese nicht sofort eingeschaltet werden, sondern vom ausgeschalteten Zustand aus auf die volle Leuchtstärke gebracht werden. Gleiches gilt für den Ausschaltvorgang, so daß beim Schließen der Tür, der Heckklappe oder dergleichen nach dem Einsteigen oder nach dem Ansteuern des Stellantriebes im Sinne einer Verriegelung die Innenraumbeleuchtung über einen vorgegebenen Zeitraum langsam in der Leuchtstärke heruntergeregelt wird.

In Weiterbildung der Erfindung ist die zentrale Steuereinheit mit Mitteln zur Erfassung einer Betätigung wenigstens einer Handhabe der Tür, der Heckklappe oder dergleichen verschaltet, wobei nach Erfassung einer Betätigung einer Handhabe oder eines Schloßelementes (zum Beispiel die Erfassung der Drehung einer Drehfalle mittels eines Drehfallenschalters) sowohl der Stellantrieb als auch die Mittel für die Beleuchtung des Innenraumes angesteuert werden. Damit ist sichergestellt, daß immer dann, wenn eine Handhabe (wie zum Beispiel ein Türaußengriff oder ein Türinnengrift) betätigt worden ist, auch die Innenraumbeleuchtung eingeschaltet wird. Damit hat die gemeinsame Ansteuerung des Stellantriebes und der Innenraumbeleuchtung von der zentralen Steuereinheit aus den Vorteil, daß separate Mittel, die das Öffnen der Tür erfassen, und in Abhängigkeit derer die Innenraumbeleuchtung angesteuert wird, entfallen können. Dadurch können auch Aufnahmevorrichtungen für diese Mittel in der Karosserie (wie zum Beispiel Bohrungen) und deren Zuleitungen entfallen, wodurch der Material- und Montageaufwand weiter verringert wird.

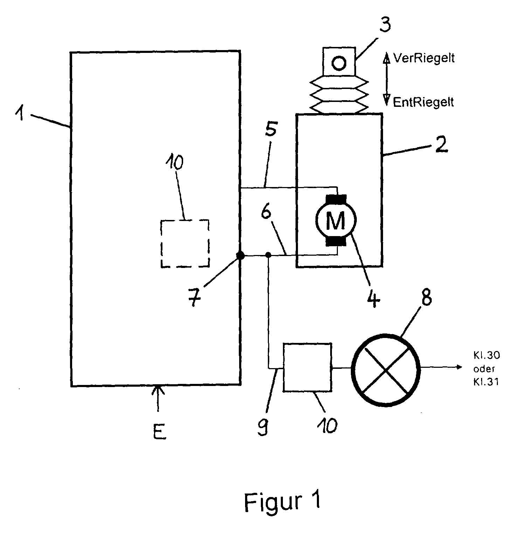

Ein Ausführungsbeispiel, auf das die Erfindung jedoch nicht beschränkt ist, ist im folgenden beschrieben und anhand der Figur 1 erläutert.

In Figur 1 ist eine Zentralverriegelung für ein nicht dargestelltes Fahrzeug, bei dem es sich gegebenenfalls auch um ein Wasserfahrzeug oder Flugzeug handeln kann, gezeigt, wobei die Zentralverriegelung eine zentrale Steuereinheit 1 aufweist. Diese zentrale Steuereinheit 1 kann Bestandteil einer übergeordneten Steuereinrichtung des Fahrzeuges oder eine separate Baueinheit sein.

Die zentrale Steuereinheit 1 ist elektrisch mit einem Stellantrieb 2 verschaltet, wobei der Stellantrieb 2 ein zwischen den beiden Positionen "verriegelt" und "entriegelt" bewegbares Stellelement 3 aufweist. Das Stellelement 3 ist mit Schlosselementen, wie zum Beispiel einer Hebelmechanik, einer Sperrklinke oder dergleichen, der Schließeinrichtung verbunden. Mittels des Stellelementes 3 wird bewirkt, daß das Schloß in der Tür, der Heckklappe oder dergleichen in den entriegelten oder verriegelten Zustand gebracht wird, wobei im entriegelten Zustand die Betätigung einer Handhabe auf die Sperrklinke wirkt, die ihrerseits eine mit der Sperrklinke in Wirkverbindung stehende Drehfalle freigibt, so daß die Tür, die Heckklappe oder dergleichen geöffnet werden kann. Eine Bewegung des Stellelementes 3 in die andere Position bewirkt, daß das Schloß verriegelt ist, was nichts anderes bedeutet, als daß die Betätigung der Handhabe nicht zu einer Betätigung der Sperrklinke führt, so daß ein Zugang zum Fahrzeug nicht möglich ist, da die Tür nicht geöffnet werden kann.

Alternativ dazu ist es denkbar, daß mittels des Stellelementes 3 die Sperrklinke direkt betätigt wird, so daß das Stellelement 3 eine Öffnungshilfe darstellt. Je nach konstruktiver Ausgestaltung des Stellantriebes 2 mit seinem Stellelement 3 und weiteren Elementen ist es denkbar, daß dieser Stellantrieb 2 nicht nur im Sinne einer Öffnungshilfe arbeitet, sondern auch als Zuziehhilfe ausgebildet ist. Dabei wird dann von dem Stellantrieb 2 über das Stellelement 3 ein Schloßelement, insbesondere die Drehfalle des Schlosses, angetrieben, so daß mittels der Bewegung der Drehfalle die Tür, die Heckklappe oder dergleichen von einer geöffneten Position in die Schließstellung gebracht wird.

Weiterhin ist in Figur 1 gezeigt, daß der Stellantrieb 2 einen das Stellelement 3 betätigenden Stellmotor 4 aufweist, wobei anstelle des Stellmotors 4 auch ein Elektromagnet Verwendung finden kann, wobei dann das Stellelement 3 als Stößel des Elektromagneten ausgebildet ist. Darüber hinaus ist es denkbar, daß der Stellmotor 4 als Antriebsmotor für eine Pumpe eines Pneumatiksystems ausgebildet ist, so daß das Stellelement 3 mittels Unterdruck oder Überdruck verstellt wird. Eine Ausführung des Stellantriebes 2 als hydraulisch wirkender Stellantrieb ist darüber hinaus auch denkbar.

Der Stellantrieb 2 ist über zwei elektrische Zuleitungen 5, 6 mit der zentralen Steuereinheit 1 verschaltet und wird in Abhängigkeit von einer Eingabe E angesteuert. Die eine elektrische Zuleitung 6 ist an einem Ausgang 7 der zentralen Steuereinheit 1 angeschlossen, wobei an diesem Ausgang 7 auch eine Innenraumbeleuchtung 8 über eine elektrische Zuleitung 9 angeschlossen ist. Soll die Innenraumbeleuchtung 8 gemeinsam (abhängig) von der Ansteuerung des Stellantriebes 2 erfolgen, sind die zweite Zuleitung (nicht näher bezeichnet) der Innenraumbeleuchtung 8 sowie die elektrische Zuleitung 5 des Stellantriebes 2 miteinander zu verbinden oder auf gleiches Potential (Masse) zu legen.

Soll eine Ansteuerung der Innenraumbeleuchtung 8 unabhängig von dem Stellantrieb 2 zum Beispiel während einer Ruhepause, während der keine Entriegelung oder Verriegelung stattfindet, oder während eines Entriegelungsvorganges, erfolgen, sind die zweite Zuleitung der Innenraumbeleuchtung 8 und die elektrische Zuleitung 5 des Stellantriebes 2 potentialmäßig voneinander zu trennen.

In der elektrischen Zuleitung 9 ist noch eine Einrichtung 10 zur Leuchtstärkeregelung (Dimmung) der Innenraumbeleuchtung 8 gezeigt, mittels der es möglich ist, beim Einschalten oder beim Ausschalten der Innenraumbeleuchtung 8 die Leuchstärke derselben zu regeln, so daß nach dem Einschalten der Innenraumbeleuchtung 8 diese langsam angeht und nach dem Schließen der Tür langsam ausgeht, wobei dies direkt oder mit einer gewissen Zeitverzögerung erfolgen kann.. Während in Figur 1 gezeigt ist, daß die Einrichtung 10 außerhalb der zentralen Steuereinheit 10 angeordnet, ist es auch denkbar, daß diese innerhalb als zusätzliches Modul oder auf einer Leiterplatte der zentralen Steuereinheit 10 angeordnet ist. Die Einrichtung 10 weist zumindest einen Schaltbaustein, insbesondere einen Feldeffekttransistor (FET), auf der von der zentralen Steuereinheit 10 gepulst, insbesondere mittels einer Pulsweitenmodulation, angesteuert wird und die Innenraumbeleuchtung 8 dimmt. Die Verwendung eines Feldeffekttransistors hat den Vorteil einer geringeren Verlustleistung gegenüber anderen elektronischen Bauelementen, so daß fast keine Verlustwärme entsteht.

Über die Eingabe E an der zentralen Steuereinheit 1 werden Eingabebefehle für die Zentralverriegelung an die zentrale Steuereinheit 1 übermittelt, wobei diese Eingabebefehle von einer Fernbedienung, von einem Innenraumtaster, von der Betätigung eines Schließzylinders oder auch der Betätigung einer Handhabe der Tür, der Heckklappe oder dergleichen kommen kann. Denkbar ist auch, daß über die Eingabe E zunächst ein Öffnungswunsch an die zentrale Steuereinheit 1 übermittelt wurde und, nachdem dieser Öffnungswunsch auf seine Zulässigkeit und Berechtigung hin überprüft und für zulässig erklärt worden ist, eine weitere Eingabe erfolgt, bei der es sich um ein Signal handelt, das zum Beispiel von einem an dem Türgriff angeordneten Schalter kommt und das der zentralen Steuereinheit 1 signalisiert, daß der Stellantrieb 2 angesteuert werden soll.

Damit ist beispielhaft eine Arbeitsweise der in Figur 1 gezeigten Zentralverriegelung gegeben, wobei auch anders aufgebaute und wirkende Zentralverriegelungen von der Erfindung mitumfaßt werden.

### Bezugszeichenliste:

- 1.: Zentrale Steuereinheit
- 2.: Stellantrieb
- 3.: Stellelement
- 4.: Stellmotor
- 5.: Elektrische Zuleitung
- 6.: Elektrische Zuleitung
- 7.: Ausgang
- 8.: Innenraumbeleuchtung
- 9.: Elektrische Zuleitung
- 10.: Einrichtung zur Leuchtstärkeregelung
- E: Eingabe
- Kl.30: Klemme 30: Dauerplus
- Kl.31: Klemme 31: Masse (Minus)

## Patentansprüche

1. Fahrzeug mit einer Zentralverriegelung für Türen, Heckklappen oder dergleichen, sowie Mitteln für die Beleuchtung eines Innenraumes des Fahrzeuges, dadurch gekennzeichnet, daß die Zentralverriegelung eine zentrale Steuereinheit (1) aufweist, wobei die zentrale Steuereinheit (1) einen gemeinsamen Ausgang (7) sowohl für zumindest einen Stellantrieb (2) als auch für die Mittel für die Beleuchtung des Innenraumes aufweist.

2. Fahrzeug nach Anspruch 1, dadurch gekennzeichnet, daß die Mittel für die Beleuchtung des Innenraumes unabhängig oder abhängig von der Ansteuerung des Stellantriebes (2) ansteuerbar sind.

3. Fahrzeug nach Anspruch 1 oder 2, dadurch gekennzeichnet, daß den Mitteln für die Beleuchtung des Innenraumes eine von der zentralen Steuereinheit (1) ansteuerbaren Einrichtung (10) zur Leuchtstärkeregelung zugeordnet ist.

4. Fahrzeug nach Anspruch 1, 2, oder 3, dadurch gekennzeichnet, daß die zentrale Steuereinheit (1) mit Mitteln zur Erfassung einer Betätigung wenigstens einer Handhabe der Tür, der Heckklappe oder dergleichen, verschaltet ist, wobei nach Erfassung einer Betätigung sowohl der Stellantrieb (2) als auch die Mittel für die Beleuchtung des Innenraumes angesteuert werden.
